# EUROPEAN PATENT SPECIFICATION

(11) **EP 2 254 719 B1**
(45) Date of publication and mention of the grant of the patent: **26.10.2011**
(21) Application number: 09713159.3
(22) Date of filing: 20.02.2009
(51) Int. Cl.: B23D 59/00, B23Q 11/00

(54) **CUTTING DEVICE FOR CUTTING METAL TUBES AND RELATIVE CUTTING METHOD**
SCHNEIDVORRICHTUNG ZUM SCHNEIDEN VON METALLROHREN UND ENTSPRECHENDES SCHNEIDVERFAHREN
DISPOSITIF DE DÉCOUPE POUR DÉCOUPER DES TUBES MÉTALLIQUES ET PROCÉDÉ DE DÉCOUPE ASSOCIÉ

(30) Priority: 22.02.2008 IT UD20080036
(43) Date of publication of application: 01.12.2010
(73) Proprietor: Julia Utensili SPA, 33017 Tarcento (IT)
(72) Inventor: CIANI, Tristano, I-33019 Tricesimo (IT)
(74) Representative: Petraz, Davide Luigi
(86) International application number: PCT/EP2009/052032
(87) International publication number: WO 2009/103786

(56) References cited:
- GB-A- 1 184 841
- JP-A- 57 194 814
- JP-A- 58 102 623
- JP-A- 58 165 913
- JP-A- 61 071 913
- JP-A- 61 192 409
- JP-A- 64 002 809
- US-A- 3 747 446
- US-A- 4 233 928

## Description

### FIELD OF THE INVENTION

The present invention concerns a cutting device according to the preamble of claim 1 and a method according to the preamble of claim 11. Such a device and such a method is known form GB 1 184 841.

### BACKGROUND OF THE INVENTION

It is known to make metal tubes, circular or rectangular in section, in a continuous production line, starting from a sheet of metal that is formed or press-bent to define a hollow tube element and subsequently welded, with induction or laser welding devices, inside and/or outside, along the joining line between the two edges of the bent sheet.

These operations are carried out, along the production line, in a tube forming zone.

Once welded, the metal tubes are cut to size with the on-the-fly technique, that is, with the metal tube moving at a determinate speed, by means of a suitable cutting device.

The cut is made immediately after the forming zone, along the production line.

The tubes or profiles are fed along the line at a high speed, for example about 130 m/min, or about 2.17 m/s.

It is known that the cutting of metal tubes thus obtained, usually to lengths varying between 3 - 6 - 9 meters, is performed using circular disks made of HSS - HM (slow cut) or friction disks (fast cut).

By slow cut we mean a cut with a cutting speed, or speed of peripheral rotation of the disk, from 15 meters/minute to 500 meters/minute, according to the type and hardness of the steel.

By fast cut we mean a cut with a cutting speed, or speed of peripheral rotation of the disk, greater than about 60 meters/second.

Since modern production techniques require a clean and accurate cut and a long duration of the cutting tool, for hours, in order to minimize the down times of the machine, disks for slow cut are usually used, made of rapid steel, super rapid steel, HSS, HM. In slow cutting, the cutting disks or saws are carefully designed, in their geometry, inclination and shape, number of teeth and type of material, in strict correlation with the properties of the material and the thickness of the tubes to be cut.

On the contrary, the fast or friction cut is more rarely used, which performs a "burnt" cut with too many burrs. The fast cut often has to be repeated to make it acceptable, with obvious waste of time and increased costs.

Normally, in the welding line excess weld material is formed, the so-called welding bead, both outside and inside the metal tube. The excess weld material can be of a different type from that which makes up the sheet, and may have different hardness and density.

The welding bead has to be removed as chip, in particular in application of tubes for making telescopic devices, which require a perfectly plane surface both inside and outside the tube, or in other applications which require a smooth and level surface.

Externally, the welding bead is removed by a de-beading tool which acts as a scraper. The resulting chip is collected and sent to suitable storage.

The excess material inside the tube is not always removed.

In the production of tubes or box profiles where it is necessary to remove the internal welding bead, a fixed or rotary tool is used, which is inserted inside the tube in order to remove the bead making a scrap chip, which remains inside the tube itself.

In these cases the internal chip is damaged by the cutting disk. Since, in the case of slow cuts, the disks are much more delicate, when they meet a sudden discontinuity of material like the chip, free inside the tube, of different material and hardness, they tend to splinter quickly and the cutting disk can even break.

Since such breakages would be too frequent, with unacceptable downtimes of the machine for continuous production, it is currently the custom to adopt the quick cut technique with the consequent defects in quality and productivity as indicated above.

One purpose of the present invention is to achieve a cutting device, and perfect a relative method, for cutting metal tubes in which the slow cut can be used without any risk of the cutting tools splintering, being ruined or breaking due to the chip of residual welding bead inside the tube.

Another purpose is to achieve a cutting device and perfect a relative method for cutting metal tubes which allows a good quality cut, clean and accurate.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a cutting device for cutting moving metal tubes, each of said tubes containing inside it residual welding elements made of material with a ferrous base, comprises a movement trolley able to transport, at a speed substantially equal to the speed of the tubes, a cutting head on which a cutting tool is mounted.

According to a characteristic feature of the present invention, the cutting device comprises electromagnetic means, mounted on the trolley and disposed upstream of the cutting tool with respect to the direction of movement or mounted fixed immediately after the forming zone of the tubes; the electromagnetic means is able to be selectively activated so as to generate an electromagnetic field inside the tube, the function of which is to temporarily move said residual welding elements to a position of non-interference with the cutting tool during the cutting step.

The present invention allows to temporarily move the scrap chip deriving from the removal of the welding bead inside the tube, before the cut, with respect to the cutting zone, so as to be able to use cutting disks of the slow cut type, that is, made of rapid steel, super rapid steel, HSS or HM or suchlike, instead of fast cut.

The term tube shall here comprise, according to the present invention, both hollow oblong elements with a circular or curvilinear section in general, and also hollow sectioned elements with a rectangular, quadrangular or other polygonal shape section, for pipes, tubes or connections for the transport of special liquids or fluids in general.

By slow cut we mean a cut with a cutting speed, or speed of peripheral rotation of the disk, from 15 meters/minute to 500 meters/minute, according to the type and hardness of the steel.

By fast cut we mean a cut with a cutting speed, or speed of peripheral rotation of the disk, greater than about 60 meters/second.

In this way we have a good quality cut, clean, accurate and without burrs and, at the same time, a good operating duration of the cutting blades, compatible with the specifications required by a continuous production line. In fact, since there are no welding residues and chips, at least in the zone affected by the passage of the cutting disks, advantageously about 700 millimeters before and after the cutting point, the teeth of the disk are prevented from splintering and/or becoming ruined, and premature breakage of the disk is prevented. In short, we have a cut with optimum conditions and high productivity of the line.

According to a variant, the electromagnetic means comprises a coil mounted coaxially to the direction of movement, into which the tube is able to be inserted, so as to define a magnetic tunnel having a determinate length and diameter, inside which the tube passes.

According to requirements, several coils may be provided, disposed in sequence along the direction of movement, or coaxial with each other, or in a combination of these solutions. Accordingly, the power of the electromagnetic field generated by the coil or coils can be appropriately regulated or set according to the working requirements of the line.

The device according to the present invention can advantageously be used with removal tools which produce a fragmented chip, because in this fragmented form it is easier to move the chip.

A further advantage of the present invention is that it moves or removes the residual welding chips acting from the outside, exploiting the action of the electromagnetic field and therefore without needing to insert further elements into the tube, which would be inconvenient given the high speed of advance of the tubes along the line.

A method for cutting metal tubes moving at a determinate speed in a direction of advance also comes within the field of the present invention, each of said tubes containing inside it residual welding elements made of material with a ferrous base, in which there is a step of advancing a cutting head on which a cutting tool is mounted, by means of a trolley which transports the cutting head in a direction of movement, and a cutting step in which the tubes are cut by the cutting tool.

The present invention, during the advance step, provides to perform an operation to remove or at least temporarily move said residual welding elements from the cutting zone before the cutting tool makes the cut. This is done by using electromagnetic means able to be selectively activated, mounted on the trolley, upstream of the cutting tool with respect to the direction of movement or mounted fixed immediately after the forming zone of the tubes. The electromagnetic means generates an electromagnetic field inside the tube, so as to displace said residual welding elements far from the cutting zone, so that said residual welding elements do not interfere with the passage of the cutting tool through the tube.

Advantageously, the cutting step is the slow cut type, using a disk made of suitable material to slow cut the tubes, chosen from a group comprising: rapid steel, super rapid steel, HSS and HM.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a metal tube with a welding line with welding material;
- fig. 2 is a schematic representation of means to remove the welding material associated with the metal tube in fig. 1;
- fig. 3 is a schematic representation of the functioning of the removal means in fig. 2;
- fig. 4 is a schematic representation of the cutting step of a metal tube with residual elements of welding material inside;
- fig. 5 is a schematic representation of the cutting device according to the present invention, applied to cutting a tube.

### DETAILED DESCRIPTION OF A PREFERENTIAL FORM OF EMBODIMENT

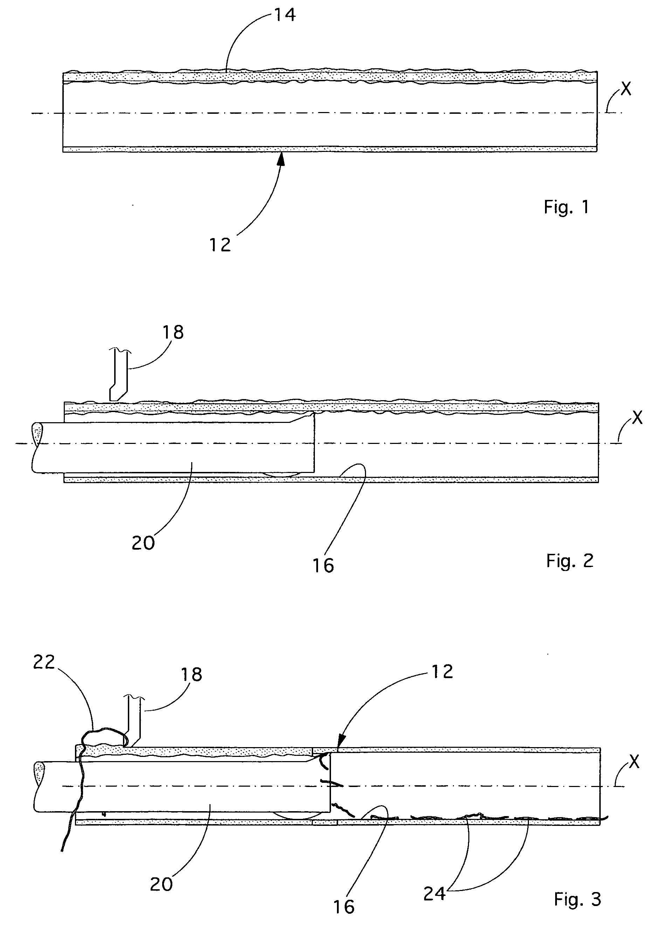

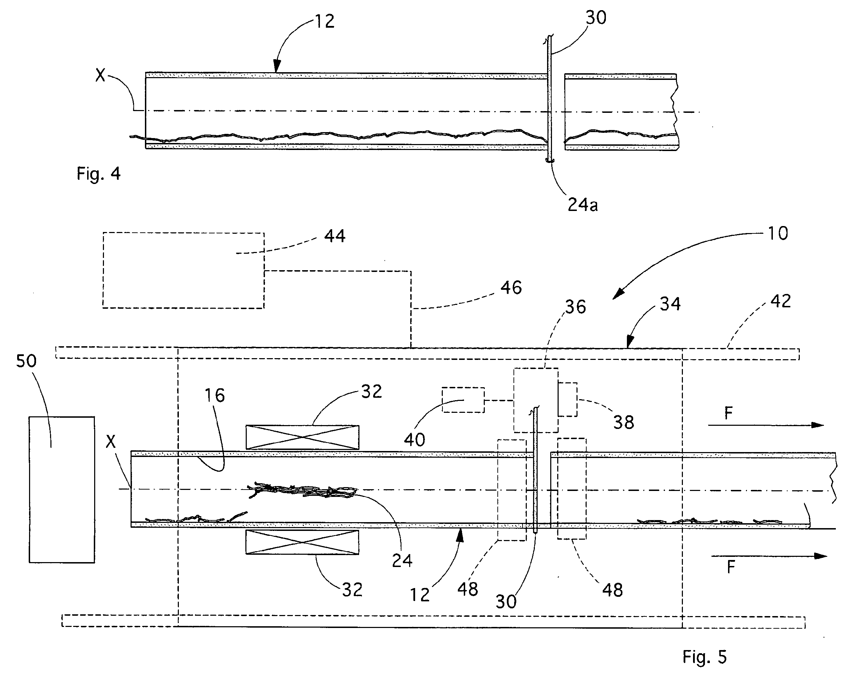

With reference to the attached drawings, a cutting device 10 is used for the slow cut, by means of a cutting disk 30 (fig. 5) made of rapid steel, super rapid steel, HSS or HM, of a metal tube 12, made from a press-bent sheet formed as a tube with an internal cavity 16, welded at the joining edges along a welding line (fig. 1), in a machine for the continuous production of tubes 12.

The forming and welding operations are performed along the production line in a suitable welding zone, schematically indicated in fig. 5 by the reference number 50.

The welding produces on the tube 12, both outside and inside the cavity 16, an excess of metal welding material 14 or bead, which has to be removed. This material has ferromagnetic properties.

The removal from the walls of the tube 12 is performed by a first external de-beading tool 18, which removes a first external welding bead 22, and a second internal de-beading tool 20, which removes a second internal welding bead 24 (fig. 2).

The second tool 20 may be configured to produce a second bead 24 which consists of a fragmented chip (fig. 3).

In the cutting zone, the line of advance of the tubes 12 has for example a length L of about 6 meters and the tubes 12 move at a constant speed of production, for example comprised between about 10 m/min and 160 m/min, in this case about 130 m/min.

The disk 30 can be made for example of high resistance rapid steel (5% molybdenum) for cutting or milling metals and alloys with hardness comprised between about 50 Kg/mm² and 80 Kg/mm². Otherwise a super rapid steel can be used, with very high resistance (5% cobalt), suitable for cutting ferrous, martensitic and austenite metals with a hardness of more than 80 Kg/mm², possibly subjected to CO₂ vaporization and/or a PVD (Physical Vapor Deposition) BALINIT® covering.

The cut is for example but not only for tubes with a diameter comprised between about 60 mm and 300 mm and thicknesses comprised between about 3 mm and 14 mm and derived profiles, for example profiles measuring 80*80*3, for example with lengths of the final cut tube comprised between about 3 meters and 12 meters, in this case about 6 meters in final length, but advantageously also for short cuts, as required by producers.

The tubes 12 are cut on the fly, immediately after the forming zone 50, with the tube 12 advancing along an axis X, or direction of movement or advance, as indicated by the arrow F, as described briefly hereafter, with reference to fig. 5.

A trolley 34 carries a cutting head 36, linear or horizontally pivoting, on which the disk 30 is mounted.

The cutting head 36 is provided with a drive motor 38, to rotate the disk 30, for example with a power comprised between about 4 and 37 W and a feed motor 40 to translate the cutting head 36 in a direction perpendicular to the axis X along which the tube 12 advances, with a cutting advance that can be linear, horizontally pivoting or orbital.

The trolley 34 moves on a rail 42, along the axis X. A movement motor 44 is provided to accelerate and translate the trolley 34 along a determinate travel, between an initial and a final position, along the axis X, at a determinate speed, equal to the speed of advance of the tubes 12, and to keep it at said constant speed for the time needed to cut the tubes 12. A motion transmission means 46 is provided, of a known type, for example rotating with a worm screw, rack, closed circle belt, flat or toothed, or with hydraulic or oil-dynamic pistons, able to transmit the power delivered by the motor 44 to the trolley 34, in order to move it along the line of advance, and possibly to decelerate its travel.

In particular, the motor 34 is able to invert the direction of movement of the transmission means 46, in order to render the motion of the trolley 34 alternating, so that it can travel and return along the line of advance. The direction of travel of the trolley 34 is indicated by the arrow F, in which direction the tube 12 is cut.

The trolley 34 is provided with clamping means 48, such as vises and suchlike, which attach it to the tube 12 to be cut, when it has reached the desired constant speed of the line of advance, so that said means moves solidly with the moving tube 12; substantially at this moment the disk 30 begins its descent toward the tube 12 to be cut, in order to cut it.

To this purpose, the disk 30 is mounted so as to allow a linear or horizontally pivoting advance, according to requirements, toward the tube 12.

When the clamping means 18 is closed, the cutting travel begins, which passes through the piece to be cut and the safety space before the cut and after the cut.

When the tube 12 has been cut, the cutting head 36 returns to its position of non-interference and at this point the clamping means 18 releases the tube 12.

Afterward, the trolley 34 is decelerated, until the final position where it is stationary and then it is returned to the initial position at the maximum allowed speed. In this way, the trolley 34 performs a to-and-fro motion along the line of advance of the tube 12.

The present invention provides to move from the cutting point, before the cut, the internal bead 24 (fig. 3) which is produced by the second tool 20 in the form of a fragmented chip.

This is in order to prevent the disadvantage shown schematically in fig. 4, where the disk 30 also cuts the bead 24 and there is a piece 24a of chip of the bead 24 jammed in the throat of the tooth of the disk 30, with consequent splintering and breakage of the tooth. This allows to adopt the slow cut technique with all the advantages described above.

In order to move the fragmented bead 24, the cutting device 10 according to the present invention comprises an electromagnet 32 (fig. 5), disposed on the trolley 34 upstream of the disk 30 and therefore solid in advancing with the disk 30.

The electromagnet 32, configured as a coil wound around the axis X, has an internal diameter slightly larger than the external diameter of the tube 12, so as to be concentric therewith and surround it and produce inside it, when activated, a magnetic field. The magnetic field produced acts on the fragmented bead 24, attracting the relative chips toward the center of the tube 12, so as to remove them from the zone where the disk 30 makes the cut. Since the electromagnet 32 advances solidly with the disk 30, and is mounted before it, with respect to the advance indicated by the arrow F, the disk 30, in its travel through the tube 12, never finds residual chips of the bead 24, because these have been removed by the action of the electromagnet 32.

Substantially, the electromagnet 32 gradually frees the cutting zone of chips, so that the disk 30 never meets chips along its cutting path.

As an alternative to mounting on the trolley 34, upstream of it, the electromagnet 32 can be mounted fixed immediately after the forming zone 50 of the tubes 12, in the zone of the last shoulder where the tubes or box profiles are formed, or in the reading zone by the encoder immediately after.

It is clear that the electromagnet 32 can be activated just before the start of the descent of the disk 30, so as to free the cutting zone of the chips, and de-activated after having freed the zone concerned, after the end of cutting. It is advantageous to configure the device 10 so as to free the cutting point about 700 millimeters before and after the cutting line, for greater safety.

Automatically, once the cut is complete, the chip displaced by the electromagnet 32 is thus taken downstream of the disk 30 and discharged outside with the subsequent cutting operation.

It is clear that modifications and/or additions of parts and/or steps may be made to the cutting device 10 for cutting metal tubes and the relative cutting method as described heretofore, without departing from the field and scope of the present invention.

It is also clear that, although the present invention has been described with reference to some specific examples, a person of skill in the art shall certainly be able to achieve many other equivalent forms of cutting device for cutting metal tubes and the relative method, having the combination of features of the independent claims and hence all coming within the scope of protection defined thereby.

## Claims

1. Cutting device for cutting metal tubes (12) moving in a direction (X) of movement, each of said tubes (12) containing inside it residual welding elements made of material with a ferrous base, the device comprising a movement trolley (34) which moves, at a speed substantially equal to the speed of the tubes (12), a cutting head (36) on which a cutting tool (30) is mounted, **characterized in that** it comprises electromagnetic means (32), mounted on the trolley (34), disposed upstream of the cutting tool (30) with respect to the direction (X) of movement or mounted fixed immediately after the forming zone (50) of the tubes (12), said means (32) being able to be selectively activated so as to generate an electromagnetic field inside the tube (12), the function of which is to move said residual welding elements to a position of non-interference with the cutting tool (30) during the cutting step.

2. Device as in claim 1, **characterized in that** the electromagnetic means (32) is disposed so as to transport said residual welding elements toward the center of the tube (12), as the cutting tool (30) gradually advances in direction (X).

3. Device as in claim 1 or 2, **characterized in that** the electromagnetic means comprises at least a coil (32) mounted coaxially to the direction (X), into which the tube (12) is able to be inserted.

4. Device as in any claim hereinbefore, **characterized in that** the cutting tool (30) is made of material suitable for the slow cut of the tubes (12) chosen from a group comprising: rapid steel, super-rapid steel, HSS and HM.

5. Device as in any claim hereinbefore, **characterized in that** it comprises removal means (18) able to remove a first welding bead (22) from the external surface of the tube (12).

6. Device as in any claim hereinbefore, **characterized in that** it comprises second removal means (20) able to remove a second welding bead (24) from the internal surface of the tube (12), disposed downstream of the electromagnetic means (32) with respect to direction (X), producing said residual welding elements inside the tube (12).

7. Device as in claim 6, **characterized in that** the second removal means (20) is able to produce residual welding elements in the form of fragmented chip.

8. Device as in any claim hereinbefore, **characterized in that** it comprises a first motor (44) to move the trolley (34), by means of transmission means (46), in direction (X).

9. Device as in any claim hereinbefore, **characterized in that** the trolley (34) comprises a second motor (40) to advance the cutting head (36) toward the tube (12), in a direction substantially perpendicular to direction (X).

10. Device as in any claim hereinbefore, **characterized in that** the cutting head (36) comprises a third motor (38) to drive the cutting tool (30) in rotation.

11. Cutting method for cutting metal tubes (12) moving in a direction (X) of movement, each of said tubes (12) containing inside it residual welding elements made of material with a ferrous base, in which there is a step to advance a cutting head (36) on which a cutting tool (30) is mounted, by means of a trolley (34) which transports the cutting head (36) in the direction (X), and a step of cutting the tubes (12) by means of the cutting tool (30), **characterized in that** it provides to effect an operation to remove or displace at least temporarily said residual welding elements from the cutting zone before the cutting tool (30) makes the cut, by using electromagnetic means (32) able to be selectively activated, mounted on the trolley (34), disposed upstream of the cutting tool (30) with respect to the direction (X) of movement or mounted fixed immediately after the forming zone (50) of the tubes (12), in which the electromagnetic means (32) generates an electromagnetic field inside the tube (12), so as to move said residual welding elements to a position of non-interference with the cutting tool (30) during the cutting step.

12. Method as in claim 11, **characterized in that** the cutting step is of the slow cut type, using a cutting tool (30) made of material suitable for the slow cut of the tubes (12), chosen from a group comprising: rapid steel, super-rapid steel, HSS and HM.

13. Method as in claim 11 or 12, **characterized in that** the electromagnetic means (32) is activated before the start of the cutting step and de-activated after the end of the cutting step.

14. Method as in claim 13, **characterized in that** it provides to move said residual welding elements about 700 mm before and after the cutting point.

## Patentansprüche

1. Sägevorrichtung zum Sägen von Metallröhren (12), welche in eine Bewegungsrichtung (X) bewegt werden, wobei jede der Röhren (12) innerhalb davon restliche Schweißelemente enthält, welche aus einem Material aus Eisenbasis erstellt sind, wobei die Vorrichtung einen Bewegungswagen (34) enthält, welcher, bei einer Geschwindigkeit, welche im Wesentlichen gleich der Geschwindigkeit der Röhren (12) ist, einen Sägekopf (36) bewegt, auf welchem ein Sägewerkzeug (30) befestigt ist, **dadurch gekennzeichnet, dass** sie ein elektromagnetisches Element (32) enthält, welches auf dem Wagen (34) befestigt ist, welches mit Bezug auf die Bewegungsrichtung (X) stromaufwärts des Sägewerkzeugs (30) angeordnet ist oder unmittelbar hinter der Ausbildungszone (50) der Röhren (12) fixiert befestigt ist, wobei das Element (32) dazu ausgelegt ist, selektiv aktiviert zu werden, um somit ein elektromagnetisches Feld innerhalb der Röhre (12) zu erzeugen, wobei die Funktion davon darin liegt, die restlichen Schweißelemente zu einer Position von keinerlei Interferenz mit dem Sägewerkzeug (30) im Verlaufe des Sägeschrittes zu bewegen.

2. Vorrichtung nach Anspruch 1, **dadurch gekennzeichnet, dass** das elektromagnetische Element (32) derart angeordnet ist, dass die restlichen Schweißelemente zum Zentrum der Röhre (12) transportiert werden, wenn das Sägewerkzeug (30) schrittweise in Richtung (X) fortschreitet.

3. Vorrichtung nach Anspruch 1 oder 2, **dadurch gekennzeichnet, dass** das elektromagnetische Element zumindest eine Spule (32) enthält, welche koaxial zur Richtung (X) befestigt ist, innerhalb welcher die Röhre (12) einsetzbar ist.

4. Vorrichtung nach einem der vorhergehenden Ansprüche, **dadurch gekennzeichnet, dass** das Sägewerkzeug (30) aus einem Material erstellt ist, welches zum langsamen Sägen der Röhren (12) ausgelegt ist, welches aus einer Gruppe ausgewählt ist, welche enthält: Schnellstahl, Superschnellstahl, HSS und HM.

5. Vorrichtung nach einem der vorhergehenden Ansprüche, **dadurch gekennzeichnet, dass** sie ein Entnahmeelement (18) enthält, welches dazu ausgelegt ist, eine erste Schweißperle (22) von der externen Oberfläche der Röhre (12) zu entfernern.

6. Vorrichtung nach einem der vorhergehenden Ansprüche, **dadurch gekennzeichnet, dass** sie ein zweites Entnahmeelement (20) enthält, welches dazu ausgelegt ist, eine zweite Schweißperle (24) von der inneren Oberfläche der Röhre (20) zu entfernen, welches mit Bezug auf die Richtung (X) stromabwärts des elektromagnetischen Elementes (32) angeordnet ist, welches die restlichen Schweißelemente innerhalb der Röhre (12) erzeugt.

7. Vorrichtung nach Anspruch 6, **dadurch gekennzeichnet, dass** das zweite Entnahmeelement (20) dazu ausgelegt ist, restliche Schweißelemente in der Form von fragmentierten Abplatzungen zu erzeugen.

8. Vorrichtung nach einem der vorhergehenden Ansprüche, **dadurch gekennzeichnet, dass** sie einen ersten Motor (44) enthält, um den Wagen (34) mittels eines Überführungselementes (46) in die Richtung (X) zu bewegen.

9. Vorrichtung nach einem der vorhergehenden Ansprüche, **dadurch gekennzeichnet, dass** der Wagen (34) einen zweiten Motor (40) zum Vorantreiben des Sägekopfes (36) in Richtung zu der Röhre (12), in eine Richtung, welche im Wesentlichen senkrecht zur Richtung (X) ist, enthält.

10. Vorrichtung nach einem der vorhergehenden Ansprüche, **dadurch gekennzeichnet, dass** der Sägekopf (36) einen dritten Motor (38) zum Antreiben des Sägewerkzeugs (30) in Umdrehung enthält.

11. Sägeverfahren zum Sägen von Metallröhren (12), welche in eine Bewegungsrichtung (X) bewegt werden, wobei jede der Röhren (12) innerhalb davon restliche Schweißelemente enthält, welche aus einem Material aus Eisenbasis erstellt sind, bei welchem es einen Schritt zum Vortreiben eines Sägekopfes (36), auf welchem ein Sägewerkzeug (30) befestigt ist, mittels eines Wagens (34), welcher den Sägekopf (36) in die Richtung (X) transportiert, und einen Schritt zum Sägen der Röhren (12) mittels des Sägewerkzeugs (30) gibt, **dadurch gekennzeichnet, dass** es ein Bewirken eines Betriebes zum Entnehmen oder Versetzen, zumindest temporär, der restlichen Schweilielementa von der Sägezone, bevor das Sägewerkzeug (30) den Schnitt vollzieht, bereitstellt, unter Verwendung eines elektromagnetischen Elements (32), welches dazu ausgelegt ist, selektiv aktiviert zu werden, welches auf den Wagen (34) befestigt ist, welches mit Bezug auf die Bewegungsrichtung (X) stromaufwärts des Sägewerkzeugs (30) befestigt ist oder unmittelbar hinter der Ausbildungszone (50) der Röhren (12) fixiert befestigt ist, wobei das elektromagnetische Element (32) ein elektromagnetisches Feld innerhalb der Röhre (12) erzeugt, um somit die restlichen Schweißelemente in eine Position von keinerlei Interferenz mit dem Sägewerkzeug (30) im Verlaufe des Sägeschrittes zu bewegen.

12. Verfahren nach Anspruch 11, **dadurch gekennzeichnet, dass** der Sägeschritt vom Typ eines langsamen Schnittes unter Verwendung eines Sägewerkzeugs (30) ist, welches aus einem Material erstellt ist, welches für den langsamen Schnitt der Röhren (12) geeignet ist, welches aus einer Gruppe ausgewählt ist, welche enthält: Schnellstahl, Superschnellstahl, HSS und HM.

13. Verfahren nach Anspruch 11 oder 12, **dadurch gekennzeichnet, dass** das elektromagnetische Element (32) vor dem Beginn des Sägeschrittes aktiviert wird und nach dem Ende des Sägeschrittes deaktiviert wird.

14. Verfahren nach Anspruch 13, **dadurch gekennzeichnet, dass** es ein Bewegen der restlichen Schweißelemente um 700 mm vor und hinter dem Sägepunkt bereitstellt.

## Revendications

1. Dispositif de découpe pour découper des tubes métalliques (12) se déplaçant dans une direction (X) de mouvement, chacun desdits tubes (12) contenant à l'intérieur des éléments de soudage résiduels faits dans un matériau avec une base ferreuse, le dispositif comprenant un chariot de déplacement (34) qui déplace, à une vitesse sensiblement égale à la vitesse des tubes (12), une tête de découpe (36) sur laquelle un outil de découpe (30) est monté, **caractérisé en ce qu'**il comprend des moyens électromagnétiques (32), montés sur le chariot (34), disposés en amont de l'outil de découpe (30) par rapport à la direction (X) de mouvement ou montés de manière fixe immédiatement après la zone de formation (50) des tubes (12), lesdits moyens (32) pouvant être sélectivement activés de manière à générer un champ électromagnétique à l'intérieur du tube (12), dont la fonction est de déplacer les éléments de soudage résiduels jusqu'à une position de non-interférence avec l'outil de découpe (30) pendant l'étape de découpe.

2. Dispositif selon la revendication 1, **caractérisé en ce que** les moyens électromagnétiques (32) sont disposés de manière à transporter lesdits éléments de soudage résiduels vers le centre du tube (12), au fur et à mesure que l'outil de découpe (30) avance progressivement dans la direction (X).

3. Dispositif selon la revendication 1 ou 2, **caractérisé en ce que** les moyens électromagnétiques comprennent au moins une bobine (32) montée de manière coaxiale par rapport à la direction (X), dans laquelle le tube (12) peut être inséré.

4. Dispositif selon l'une quelconque des revendications précédentes, **caractérisé en ce que** l'outil de découpe (30) est réalisé dans un matériau approprié pour la découpe lente des tubes (12) choisis dans un groupe comprenant l'acier rapide, l'acier super rapide, le HSS et le HM.

5. Dispositif selon l'une quelconque des revendications précédentes, **caractérisé en ce qu'**il comprend des moyens de retrait (18) pouvant retirer un premier cordon de soudure (22) de la surface externe du tube (12).

6. Dispositif selon l'une quelconque des revendications précédentes, **caractérisé en ce qu'**il comprend des deuxièmes moyens de retrait (20) pouvant retirer un deuxième cordon de soudure (24) de la surface interne du tube (12), disposé en aval des moyens électromagnétiques (32) par rapport à la direction (X), produisant lesdits éléments de soudage résiduels à l'intérieur du tube (12).

7. Dispositif selon la revendication 6, **caractérisé en ce que** les deuxièmes moyens de retrait (20) peuvent produire des éléments de soudage résiduels se présentant sous la forme de copeaux fragmentés.

8. Dispositif selon l'une quelconque des revendications précédentes, **caractérisé en ce qu'**il comprend un premier moteur (44) pour déplacer le chariot (34), au moyen de moyens de transmission (46), dans la direction (X).

9. Dispositif selon l'une quelconque des revendications précédentes, **caractérisé en ce que** le chariot (34) comprend un deuxième moteur (40) pour faire avancer la tête de découpe (36) vers le tube (12), dans une direction sensiblement perpendiculaire à la direction (X).

10. Dispositif selon l'une quelconque des revendications précédentes, **caractérisé en ce que** la tête de découpe (36) comprend un troisième moteur (38) pour entraîner l'outil de découpe (30) en rotation.

11. Procédé de découpe pour découper des tubes métalliques (12) se déplaçant dans une direction (X) de mouvement, chacun desdits tubes (12) contenant à l'intérieur de ce dernier des éléments de soudage résiduels faits dans un matériau avec une base ferreuse, dans lequel on trouve une étape consistant à faire avancer une tête de découpe (36) sur laquelle un outil de découpe (30) est monté, au moyen d'un chariot (34) qui transporte la tête de découpe (36) dans la direction (X), et une étape consistant à découper les tubes (12) au moyen de l'outil de découpe (30), **caractérisé en ce qu'**il propose d'effectuer une opération pour retirer ou déplacer au moins temporairement lesdits éléments de soudage résiduels de la zone de découpe avant que l'outil de découpe (30) ne réalise la découpe, en utilisant des moyens électromagnétiques (32) pouvant être activés de façon sélective, montés sur le chariot (34), disposés en amont de l'outil de découpe (30) par rapport à la direction (X) de mouvement ou montés de manière fixe immédiatement après la zone de formation (50) des tubes (12), dans lequel les moyens électromagnétiques (32) génèrent un champ électromagnétique à l'intérieur du tube (12), afin de déplacer lesdits éléments de soudage résiduels jusqu'à une position de non-interférence avec l'outil de découpe (30) pendant l'étape de découpe.

12. Procédé selon la revendication 11, **caractérisé en ce que** l'étape de découpe est un type de découpe lente, utilisant un outil de découpe (30) réalisé dans un matériau approprié pour la découpe lente des tubes (12), choisis dans un groupe comprenant l'acier rapide, l'acier super rapide, le HSS et le HM.

13. Procédé selon la revendication 11 ou 12, **caractérisé en ce que** les moyens électromagnétiques (32) sont activés avant le commencement de l'étape de découpe et désactivés après la fin de l'étape de découpe.

14. Procédé selon la revendication 13, **caractérisé en ce qu'**il propose de déplacer lesdits éléments de soudage résiduels environ sur 700 mm avant et après le point de découpe.
